# EUROPEAN PATENT APPLICATION

(11) **EP 3 115 340 A1**
(43) Date of publication of application: **11.01.2017**
(21) Application number: 15176274.7
(22) Date of filing: 10.07.2015
(51) Int. Cl.: C02F 1/00, C02F 1/44, B01D 65/02, B01D 61/12

(54) **LIQUID TREATMENT APPARATUS INCLUDING AT LEAST ONE CROSS-FLOW FILTRATION DEVICE AND METHOD OF OPERATING THE APPARATUS**

(71) Applicant: Brita GmbH, 65232 Taunusstein (DE)
(72) Inventor: Weidner, Peter, 92444 Rötz (DE); Floren, Simon, 65620 Waldbrunn (DE)
(74) Representative: van Lookeren Campagne, Constantijn August

(57) **Abstract**

A method of operating a liquid treatment apparatus including at least one cross-flow filtration device (5;5';40,41), each cross-flow filtration device (5;5';40,41) having an inlet (4;4';42,43), an outlet (6;6';46,47) for retentate and an outlet for filtrate (7;7';44,45)includes operating one of the at least one cross-flow filtration devices (5;5';40,41) to obtain filtrate. The filtrate is used to produce product liquid for delivery through an outlet (23;23';58) of the apparatus. At least one of the at least one cross-flow filtration devices (5;5';40,41) is operated in a rinse mode, in which a larger proportion of liquid entering through the inlet (4;4';42,43) passes to the retentate outlet (6;6';46,47) than during a preceding filtrate production mode of operation of that cross-flow filtration device (5;5';40,41), and liquid originating from that retentate outlet (6;6';46,47) is used to produce the product liquid.

## Description

The invention relates to a method of operating a liquid treatment apparatus including at least one cross-flow filtration device, each cross-flow filtration device having an inlet, an outlet for retentate and an outlet for filtrate, wherein the method includes operating one of the at least one cross-flow filtration devices to obtain filtrate, and wherein
the filtrate is used to produce product liquid for delivery through an outlet of the apparatus.

The invention also relates to a liquid treatment apparatus including:
at least one cross-flow filtration device, each cross-flow filtration device having an inlet, an outlet for retentate and an outlet for filtrate;
an outlet for the delivery of product liquid;
a system of conduits and valves for using filtrate obtained by operating one of the at least one cross-flow filtration devices to produce the product liquid; and
a control system for controlling the operation of the liquid treatment apparatus.

DE 10 2004 051 695 A1 discloses a method of generating service and drinking water from saline waters, principally sea water and brackish water with a specific conductance above 2000 µS/cm. The water to be treated is first pre-treated, whereby it is passed through an electrochemical reactor, whereupon components of the water still capable of forming a suspension are adsorbed and oxidised in a subsequent reactor with activated carbon, whereupon oxidised organic contaminants are broken down further and pyrogenic germs are destroyed in a flow-through reactor at the end of the apparatus by means of ultraviolet irradiation. Water thus treated is then purified to a concentration of 50 to 200 mg Na⁺ and 40 to 100 mg magnesium and calcium ions per litre of water by means of reverse osmosis. This water having such a low ion concentration is set to have a mineral concentration of 700 to 900 mg/l by means of pre-treated saline water. The mixing of the water largely demineralised by means of reverse osmosis with the pre-treated saline water is conductance-controlled. In an embodiment, an apparatus is operated with two reverse osmosis modules connected in series. Mixing of 190 l/h of purified water with 60 l/h from the intermediate stage leads to fresh water with a NaCl content between 350 and 400 mg/l. In another embodiment, the apparatus is completed by a buffer container. Mixing is controlled by a selective conductivity check in the buffer container.

A problem of mixing permeate with water left untreated by reverse osmosis or untreated by the last stage of a cascade of reverse osmosis modules is that a relatively large amount of water is used.

It is an object of the invention to provide a method and apparatus of the types defined above in the opening paragraphs that allow for more efficient use of liquid to provide filtrate from a cross-flow filtration device with a higher concentration of components removable by the cross-flow filtration device than the filtrate.

This object is achieved according to a first aspect by the method according to the invention, which is characterised by operating at least one of the at least one cross-flow filtration devices in a rinse mode, in which a larger proportion of liquid entering through the inlet passes to the retentate outlet than during a preceding filtrate production mode of operation of that cross-flow filtration device, and using liquid originating from that retentate outlet to produce the product liquid.

Because the method includes operating one of the at least one cross-flow filtration devices to obtain filtrate and the filtrate is used to produce product liquid for delivery through an outlet of the apparatus, the product liquid will have a lower concentration of certain components than the untreated liquid.
In the case of reverse osmosis of nanofiltration devices, the product liquid will have a higher mineral concentration and a relatively low level of other contaminants. By operating at least one of the at least one cross-flow filtration devices in a rinse mode in which a larger proportion of liquid entering through the inlet passes to the retentate outlet than during a preceding filtrate production mode of operation of that cross-flow filtration device, premature blocking of the membrane or membranes in the cross-flow filtration device can be prevented. Rather than connect the retentate outlet (only) to drain in this mode of operation, some of the liquid used to rinse the membrane or membranes is recovered. Because it is used to form a constituent of the product liquid, the product liquid need not have a very low concentration of components removable by the cross-flow filtration device in the filtrate production mode.

In the liquid treatment apparatus, each cross-flow filtration device has an inlet, an outlet for retentate and an outlet for filtrate. In general, such a filtration device includes at least one semi-permeable membrane for separating substances from the liquid to be purified. The at least one membrane may, for example, be provided with pores having a pore size of at most 10 Å. The filtration device may include a spiral wound membrane module, a hollow fibre membrane module, a tubular membrane module and/or a membrane in sheet form mounted on frame, for example. The liquid that passes through the at least one membrane forms the filtrate and leaves the device through the filtrate outlet. The liquid that flows across but not through the at least one membrane forms the retentate (also referred to as concentrate) and leaves the device through the retentate outlet. In the filtrate production mode of operation, the pressure differential and membrane pore size may be sufficient to remove at least one solute from the liquid to be purified by the cross-flow filtration device. The methods outlined herein find particular application where the cross-flow filtration device is a reverse osmosis (RO) device. These allow the mineral concentration to be reduced to a relatively low value.

After a period of operating in the filtrate production mode, incrustations, e.g. in the form of scale, are likely to have been formed on the at least one membrane. This will result in less filtrate being produced for a given amount of untreated water entering the liquid treatment apparatus. By operating the cross-flow filtration device in the rinse mode, scale is removed and can dissolve in the liquid that leaves the retentate outlet. In a particular variant, substantially all of the liquid entering through the inlet of the cross-flow filtration device passes to the retentate outlet. A flow of liquid through the filtrate outlet may be prevented. For example, at least or only a flow of liquid through the filtrate outlet into the cross-flow filtration device may be prevented. This increases the lifespan of the at least one membrane.

An embodiment of the method includes controlling the production of the product liquid to achieve a target value of a measure of a concentration of at least one component in the product liquid.

Thus, it is possible to deliver product liquid with properties tailored to specific applications. In the case of aqueous liquids, e.g. drinking water, liquid for making coffee can be delivered to a coffee machine and liquid with a much lower mineral content can be delivered to a dish washer, for example.

In an embodiment of the method, the liquid originating from the retentate outlet and used to produce the product liquid is admixed to other liquid, e.g. liquid including at least some of the filtrate.

The liquid originating from the retentate outlet need not be the only liquid admixed to the other liquid. Furthermore, the mix may be treated further to achieve a further increase in the concentration of at least one component in the mix. The other liquid may be filtrate produced by the cross-flow filtration device before it was switched to operate in the rinse mode. Alternatively, two cross-flow filtration devices may be operated in parallel, one in the rinse mode and one in the filtrate production mode. By admixing the liquid originating from the retentate outlet to the other liquid, volumes of liquid with relatively well-determined mineral concentrations are used to form the product liquid. This is even more the case where the other liquid is the filtrate. It is thus relatively certain that the result will have a mineral concentration in between two extremes. The approximate value can be set by setting the volume ratio where mixing is carried out in a batch process or the volumetric flow rate ratio where mixing is carried out in a continuous process. For example, where two cross-flow filtration devices are operated in parallel, they can each be supplied with untreated liquid at a particular volumetric flow rate ratio. Given the (known) yield in the filtrate production mode and the approximate concentration when a cross-flow filtration device is operated in the rinse mode, the mineral concentration in the mix will also be known. It can be set by designing the apparatus to establish the particular volumetric flow rate ratio or by adapting the volumetric flow rate ratio if the liquid treatment apparatus allows.

A variant of this embodiment includes obtaining a signal representative of a measure of a concentration of at least one component in the liquid originating from the retentate outlet from a sensor prior to mixing and determining a volume of a flow of liquid originating from the retentate outlet and used for mixing.

Determining in this context may include measuring only, setting only, or measuring and controlling. The sensor may include a device for measuring the specific electrical conductance of a liquid. In one variant, the sensor may include a thermometer and be arranged to provide a specific electrical conductance signal processed to account for deviations from a certain temperature. The signal is then more accurately representative of mineral concentration, because account is taken of the temperature-dependence of the ionic activity. In a variant, the sensor may be ion-selective. Such devices generally include a device for measuring the specific electrical conductance including at least one ion-specific electrode, e.g. one comprising an ion-selective membrane made of glass or one or more polymers. Knowing the value of the measure of a concentration of at least one component in the liquid originating from the retentate outlet means that the value of the concentration after mixing can also be determined or at least estimated. The value of the measure in the filtrate may be assumed to be much lower, e.g. negligible. In an alternative variant, a signal representative of a measure of a concentration of at least one component in at least the filtrate prior to mixing is also obtained.

A particular variant further includes measuring the volume of the flow of liquid originating from the retentate outlet and used for mixing.

The volume may be measured by totalling the volumetric flow rate determined by a flow sensor. Knowing the volume in addition to the value of a measure of a concentration of the components of interest allows the value in the product liquid to be predicted or controlled even more accurately. In a particular variant, mixing is carried out at a mixing location, e.g. in a vessel, and the method includes obtaining a signal representative of a measure of a concentration of at least one component in liquid flowing to the mixing location from a sensor and measuring the volume of each flow of liquid to the mixing location. The sensors used therein are separated from the mixing location only by flow-conductors leaving the concentration essentially unchanged. In this way, account can even be taken of the properties of liquid still in conduits upstream of the sensors arranged to conduct the liquid originating from the retentate outlet and those conducting the filtrate when the mode or modes of operation is or are switched. The result is relatively accurate knowledge and/or control of the properties of the product liquid.

A variant of the method including obtaining a signal representative of a measure of a concentration of at least one component in the liquid originating from the retentate outlet from a sensor prior to mixing and determining a volume of a flow of liquid originating from the retentate outlet and used for mixing includes calculating a required volume and controlling the volume of the flow of liquid originating from the retentate outlet and used for mixing.

The product liquid or an intermediate product leading to the product liquid is thus given a particular value of the measure of the concentration of at least one specific component.

In an embodiment of the method in which the liquid originating from the retentate outlet and used to produce the product liquid is admixed to other liquid, e.g. liquid including at least some of the filtrate, the admixing includes at least a first phase, in which the liquid originating from the retentate outlet of one of the at least one cross-flow filtration devices is liquid obtained by supplying at least some liquid other than the filtrate to the inlet of that cross-flow filtration device.

This is a relatively efficient way of obtaining liquid with a relatively high concentration of the components of interest for mixing with the filtrate. Only a small amount need be mixed with the filtrate.

An embodiment of the method in which the liquid originating from the retentate outlet and used to produce the product liquid is admixed to other liquid, e.g. liquid including at least some of the filtrate, includes calculating volumes of filtrate and liquid originating from the retentate outlet to be mixed in the first phase on the basis of a target value of a measure of a concentration of at least one component in the product liquid and values of the measure in the liquid originating from the retentate outlet prior to mixing and in the liquid to which the liquid originating from the retentate outlet is admixed.

This allows the concentration of the at least one component in the product liquid or an intermediate product for forming the product liquid to be set.

In a particular variant hereof, calculating the volumes includes taking account of volumes of liquid in at least one of a conduit section connected to the inlet, a conduit section connected to the retentate outlet and the cross-flow filtration device previously operated in the filtrate production mode and of the respective values of the concentration measure of these volumes of liquid immediately prior to changing from the preceding use to the current use.

This takes account of the fact that there may still be liquid in these conduits at the point at which the cross-flow filtration device or devices is or are switched between the filtrate production mode and the rinse mode. There may similarly be liquid with different properties in the cross-flow filtration device on the upstream side of the membrane or membranes immediately after switching compared with a later point in time.

In a variant of the method in which the liquid originating from the retentate outlet and used to produce the product liquid is admixed to other liquid, e.g. liquid including at least some of the filtrate, and which includes calculating volumes of filtrate and liquid originating from the retentate outlet to be mixed in the first phase on the basis of a target value of a measure of a concentration of at least one component in the product liquid and values of the measure in the liquid originating from the retentate outlet prior to mixing and in the liquid to which the liquid originating from the retentate outlet is admixed, the volumes are calculated to achieve a value of the measure in the mix in the first phase lower than the target value, and the value is raised in a second phase to obtain the product liquid.

This variant allows the mix of filtrate and liquid originating from the retentate outlet to be used for further rinsing of a cross-flow filtration device operating in the rinse mode without exceeding a target value of the concentration of the at least one component of interest. Alternatively, the second phase may comprise some other form of treatment, e.g. treatment by ion exchange. The mix need not be treated by a cross-flow filtration device operating in a filtrate production mode, because the target value is not overshot. In a particular embodiment, the rate of increase per unit volume of liquid originating from the retentate outlet is lower in the second phase than in the first phase. The first phase is then used to obtain nearly the target value. The second phase is used to rinse with as much liquid as possible.

In an embodiment of the method, in which the liquid originating from the retentate outlet and used to produce the product liquid is admixed to other liquid, e.g. liquid including at least some of the filtrate, at least some of the liquid mix obtained by admixing the liquid originating from the retentate outlet of the cross-flow filtration device operated in the rinse mode is recycled to the inlet of the cross-flow filtration device whilst operating the cross-flow filtration device in the rinse mode.

This provides for more effective rinsing without increasing the consumption of untreated liquid. The mineral concentration in the liquid may also be raised, but will generally only be raised slightly, in particular compare to the alternative of recycling pure filtrate.

In particular variant of this embodiment, the step of recycling is repeated upon determining that liquid has not passed through the cross-flow filtration device for a certain amount of time.

Thus, when the cross-flow filtration device has neither been operated in the rinse mode nor in the filtrate production mode for a certain amount of time, the membrane is wetted again. Incrustations can be removed. Because rinsing is carried out with liquid having a relatively low mineral content, the liquid has a relatively low osmotic pressure. This makes it suitable for inhibiting bacterial growth on the membrane or membranes of the cross-flow filtration device as well.

In an embodiment of the method, the liquid treatment apparatus includes at least two of the cross-flow filtration devices, and the filtrate is obtained by operating one of the cross-flow filtration devices in the filtrate production mode whilst operating another of the cross-flow filtration devices in the rinse mode.

Thus, the product liquid is obtainable from the filtrate produced by the cross-flow filtration device operating in the filtrate production mode and the liquid originating from the retentate outlet of the cross-flow filtration device operating in the rinse mode. Product liquid is produced continuously and concurrently with the rinsing. In a variant in which the concentration of at least one component of the product liquid is controlled, it is possible to respond to a change in target value relatively quickly.

In an embodiment of the method, liquid including the filtrate is supplied to the inlet of the cross-flow filtration device operating in the rinse mode.

Rinsing can thus be carried out over a shorter period of time. The mineral content of the product water can be raised without having to use a large amount of untreated liquid supplied to the inlet of the cross-flow filtration device in the rinse mode. In an embodiment, pure filtrate is supplied to the inlet in the rinse mode. In that case, scale on the membrane or membranes of the cross-flow filtration device operated in the rinse mode will dissolve better. In other embodiments, a mix of untreated liquid and filtrate will be supplied.

In a variant of this embodiment, liquid received through an inlet of the liquid treatment apparatus is admixed to the liquid including the filtrate prior to being supplied to the inlet of the cross-flow filtration device operating in the rinse mode.

Compared to mixing downstream of the cross-flow filtration device, more liquid, but relatively little liquid received through the inlet of the liquid treatment apparatus, is used for rinsing. The overall efficiency with which product liquid is obtained is thereby improved.

In an embodiment of the method, at least one of the filtrate and the liquid originating from the retentate outlet is delivered to a vessel.

This allows the method to be carried out in an apparatus with only one cross-flow filtration device. It can be used to obtain the filtrate in the filtrate production mode and then switched to the rinse mode. At least one of the filtrate and the liquid originating from the retentate outlet and received in the vessel during operation in the rinse mode is retained for use during the subsequent different mode of operation. For example, filtrate may be retained for subsequent mixing with liquid originating from the retentate outlet and/or recycling to the inlet of the cross-flow filtration device switched to operate in the rinse mode. Even if there are two or more cross-flow filtration devices, collecting filtrate and in particular liquid originating from the retentate outlet in the vessel allows one to take account of variations in the concentration of components removable by the cross-flow filtration device in the filtrate production mode. Such variations are also smoothed out.

In an embodiment of the method in which the liquid originating from the retentate outlet and used to produce the product liquid is admixed to other liquid, e.g. liquid including at least some of the filtrate, the liquid originating from the retentate outlet is admixed in the vessel.

This embodiment allows one to obtain product liquid or an intermediate product with a particular mineral concentration without the use of a mixing or blending valve for admixing untreated liquid to filtrate. Rather, the volume of liquid admitted into the vessel can be controlled or at least measured optionally in combination with a parameter of the liquid representative of the concentration of at least one component of the liquid. This is relatively simple. By contrast, the use of mixing valves requires means for responding to variations in the pressure, temperature, volume and quality of liquid received at an inlet of the liquid treatment apparatus. It is observed that this embodiment includes a variant in which filtrate is collected in the vessel whereupon only the contents of the vessel (and those of any conduits between the cross-flow filtration device and the vessel) are recycled to the inlet of the cross-flow filtration device in the rinse mode. At least immediately at the start of operation in the rinse mode, filtrate remaining in the vessel has liquid originating from the retentate outlet added to it. Later, a mix of liquid in the vessel has liquid originating from the retentate outlet added to it.

In a variant of this embodiment, the product liquid is dispensed to the outlet of the apparatus from the vessel.

Thus, it is possible to use the vessel as a buffer, e.g. whilst a or the cross-flow filtration device of the liquid treatment apparatus is being operated in the rinse mode. This variant is of particular use where the liquid treatment apparatus is arranged to supply product liquid to one or more appliances arranged to draw liquid intermittently. An example would be the supply of potable water to a coffee machine in a catering establishment.

In an embodiment of the method in which the liquid originating from the retentate outlet and used to produce the product liquid is admixed to other liquid, e.g. liquid including at least some of the filtrate, in the vessel, a volume of liquid in the vessel is tracked.

In this embodiment, it is possible to predict relatively accurately the concentration of at least one component of interest in the liquid in the vessel upon mixing, because it is known how much liquid is mixed with the liquid originating from the retentate outlet. In a variant, the value of a parameter representative of the concentration of at least one component in the liquid in the vessel is determined, e.g. calculated, repeatedly. It may be determined at least subsequent to a change in the volume of liquid in the vessel exceeding a certain minimum amount. Alternatively, it may be determined at regular intervals. In a particular embodiment of the method that includes calculating a required volume and controlling the volume of the flow of liquid originating from the retentate outlet and used for mixing, the required volume is recalculated when liquid is supplied from the vessel to an outlet of the liquid treatment apparatus whilst liquid originating from the retentate outlet is supplied to the vessel during operation of the cross-flow filtration device in the rinse mode. Tracking may be accomplished by keeping track of the volumes of liquid entering and leaving the vessel. Alternatively or additionally, the liquid level in the vessel may be measured by one or more sensors. Measuring only the liquid level is feasible if simultaneous supply of liquid to and withdrawal of liquid from the vessel is prevented.

In an embodiment of the method, the filtrate outlet of the cross-flow filtration device used to produce filtrate in the filtrate production mode is arranged to supply filtrate through a non-return valve.

This embodiment ensures that the pressure on the filtrate side of the membrane does not exceed that on the retentate side, especially during operation of the cross-flow filtration device in the rinse mode. In that mode, a high rate of flow through the cross-flow filtration device may cause the pressure differential across the membrane to reverse.

In an embodiment of the method, the liquid originating from the retentate outlet is subjected to at least one treatment step.

Certain substances rinsed from the membrane may be undesirable in the product liquid. These may be removed, for example. Alternatively, another property such as the acidity may be adjusted.

Each of the least one treatment steps may consist of a treatment other than membrane filtration. In a particular example, at least one of the at least one treatment steps includes treatment by sorption, e.g. by ion exchange.

Treatment by sorption may comprise treatment by a sorbent such as activated carbon, e.g. to remove any organic contaminants. This and/or treatment by ion exchange may include treatment to remove heavy metals. Treatment by ion exchange may include treatment to adjust at least one of carbonate hardness, total hardness and the acidity of an aqueous liquid.

According to another aspect, the liquid treatment apparatus according to the invention is characterised in that the control system is arranged to switch the valves such that at least one of the at least one cross-flow filtration devices is operated in a rinse mode, in which a larger proportion of liquid entering through the inlet passes to the retentate outlet than during a preceding filtrate production mode of operation of that cross-flow filtration device, and liquid originating from that retentate outlet is used to produce the product liquid.

By switching the valves such that liquid originating from the retentate outlet of the cross-flow filtration device operating in the rinse mode is used to produce the product liquid, product liquid with a higher mineral concentration than pure filtrate is obtainable. In the case of aqueous liquids such as drinking water, this liquid is suitable for preparing beverages that are generally perceived to taste good. An example of such a beverage is coffee, which should not be brewed with water having a very low or very high mineral content (100 -200 mg·l⁻¹ is recommended by trade bodies). Because the control system is arranged to switch the valves such that at least one of the at least one cross-flow filtration devices is operated in a rinse mode after having been operated in the filtrate production mode, the useful lifespan of the membrane or membranes in the cross-flow filtration device can be relatively long.

An embodiment of the liquid treatment apparatus includes an interface for obtaining data representative of a target value of a measure of a concentration of at least one component in the product liquid, wherein the control system is arranged to control production of the product liquid to achieve the target value.

It is thus possible to adapt the liquid treatment apparatus to a particular application of the product liquid.

In an embodiment of the liquid treatment apparatus, the system of conduits and valves is at least switchable into a configuration for delivering at least the liquid originating from the retentate outlet of the cross-flow filtration device operated in the rinse mode to a mixing location.

The mixing location may be arranged such that multiple flows of liquid are supplied simultaneously to the mixing location. In another embodiment, liquid is collected at the mixing location. Thus, the liquid originating from the retentate outlet is admixed to liquid previously delivered to the mixing location. The liquid collected at the mixing location may be only liquid originating from retentate outlet or outlets of the at least one cross-flow filtration devices, in case the cross-flow filtration devices are supplied with filtrate in the rinse mode.

A variant of this embodiment, further includes a sensor for providing a signal representative of a measure of a concentration of at least one component in the liquid originating from the retentate outlet of the cross-flow filtration device operated in the rinse mode upstream of the mixing location, wherein the control system is arranged to determine a volume of a flow of liquid originating from the retentate outlet and delivered to the mixing location.

In case further flows of liquid are delivered to the mixing location, in use, the control system may be arranged to determine a respective volume of each flow of liquid delivered to the mixing location. The determination may be a measurement or the volume may be regulated by the control system, e.g. where it controls a pump. In this embodiment, knowledge of how much liquid with which value of the concentration is delivered to the mixing location enables the control system to calculate the concentration in the mix. It may track this and the volume of liquid at the mixing location in order also to take account of withdrawals of product liquid.

A variant of this embodiment further includes a flow meter for measuring the volume of the flow of liquid originating from the retentate outlet and delivered to the mixing location.

The flow meter may be positioned relatively close to the mixing location for accurate results. Generally, use of a flow meter gives more accurate results.

In a variant of the embodiment in which the apparatus further includes a sensor for providing a signal representative of a measure of a concentration of at least one component in the liquid originating from the retentate outlet of the cross-flow filtration device operated in the rinse mode upstream of the mixing location, and the control system is arranged to determine a volume of a flow of liquid originating from the retentate outlet and delivered to the mixing location, the control system is arranged to calculate a required volume and to control the valves to deliver the required volume to the mixing location.

The control system thus determines the volumes of liquid to be delivered to the mixing location in order to achieve a desired concentration of at least one component in the mix.

In a variant of this embodiment, the control system is arranged to take account of volume of liquid in at least one of a conduit section connected to the inlet, a conduit section connected to the retentate outlet and in the cross-flow filtration device previously operated in the filtrate production mode and of the respective values of the concentration measure of these volumes of liquid on switching into the rinse mode.

This variant allows the use of longer conduits without loss of accuracy and without the need to flush them before using them to deliver liquid to the mixing location. Fewer valves are thus requires and less liquid is wasted. Because at least one cross-flow filtration device is switched from a filtrate production mode to a rinse mode, the liquid in e.g. a conduit section connected to the retentate outlet will first contain retentate, then liquid that was previously in the cross-flow filtration device on the upstream side of the membrane or membranes, and then the liquid resulting from rinsing. The former two will generally have a higher mineral concentration than the latter. Similarly, different liquids may be delivered to the inlet in the filtrate production mode and in the rinse mode, but the change need not take effect immediately on switching.

In a variant of the apparatus including an interface for obtaining data representative of a target value of a measure of a concentration of at least one component in the product liquid, wherein the control system is arranged to control production of the product liquid to achieve the target value, and wherein the control system is arranged to calculate a required volume and to control the valves to deliver the required volume to the mixing location, the control system is arranged to calculate a required volume to achieve a value lower than the target value in a first phase and cause the value to be raised in a subsequent second phase, wherein a rate of increase of the value per unit volume of liquid delivered to the mixing location is lower in the second phase than in the first phase.

If a demand for product liquid arises during the second phase, the second phase can be cut short. The product liquid will still meet requirements approximately. If no demand for product liquid arises, the rinse mode can be continued to improve the properties of the membrane or membranes in the cross-flow filtration device operating in the rinse mode.

In an embodiment of the apparatus in which the system of conduits and valves is at least switchable into a configuration for delivering at least the liquid originating from the retentate outlet of the cross-flow filtration device operated in the rinse mode to a mixing location, the control system is arranged to switch the valves into a configuration in which liquid originating from the retentate outlet is supplied to the mixing location and at least some liquid from a source other than the mixing location is supplied to the inlet of the cross-flow filtration device configured to operate in the rinse mode.

This allows liquid to be collected at the mixing location without needing to be recirculated. Amongst others, this makes it easier to control the concentration of at least one component of interest in the liquid at the mixing location.

In an embodiment of the apparatus in which the system of conduits and valves is at least switchable into a configuration for delivering at least the liquid originating from the retentate outlet of the cross-flow filtration device operated in the rinse mode to a mixing location, the control system is arranged to switch the valves into a configuration in which liquid from the mixing location is supplied to the inlet of the cross-flow filtration device configured to operate in the rinse mode.

Compared to supplying only untreated liquid to the inlet of the cross-flow filtration device configured to operate in the rinse mode, less liquid is wasted and more liquid is passed through the cross-flow filtration device operating in the rinse mode.

In a variant of this embodiment, the control system is arranged to cause the liquid from the mixing location to be supplied to the inlet of the cross-flow filtration device configured to operate in the rinse mode upon determining that liquid has not passed through the cross-flow filtration device for a certain amount of time.

This helps counter bacterial growth and prevent the membrane or membranes of the cross-flow filtration device from drying out and thus deteriorating.

An embodiment of the apparatus includes at least two of the cross-flow filtration devices, wherein the control system is arranged to switch the valves such that at least one of the cross-flow filtration devices is operated in the rinse mode whilst at least one other is operated in the filtrate production mode prior and subsequent to switching the valves.

Thus, product liquid is produced continuously and it is possible to operate each cross-flow filtration device in the rinse mode relatively frequently.

In an embodiment of the liquid treatment apparatus, the conduits are arranged to conduct at least liquid including the filtrate to the inlet of the cross-flow filtration device operated in the rinse mode at least when the cross-flow filtration device is operated in the rinse mode.

This reduces the consumption of untreated liquid whilst still allowing a relatively large volume of liquid to be used to operate the cross-flow filtration device in the rinse mode.

An embodiment of the liquid treatment apparatus includes an inlet for liquid to be treated, wherein the conduit and valve system is arranged to conduct at least some liquid received at the inlet for liquid to be treated to the inlet of the cross-flow filtration device operated in the rinse mode in at least one configuration of the apparatus.

This embodiment allows liquid to be supplied by the apparatus at the same time without having to use a large buffer. Moreover, if the product liquid is to have a relatively high mineral concentration, this can be achieved relatively rapidly.

An embodiment of the apparatus includes at least one vessel for receiving at least one of the filtrate and the liquid originating from the retentate outlet of the cross-flow filtration device operated in the rinse mode.

This allows the method to be carried out in an apparatus with only one cross-flow filtration device. It can be used to obtain the filtrate and then switched to the rinse mode.

In an embodiment of the apparatus, in which the system of conduits and valves is at least switchable into a configuration for delivering at least the liquid originating from the retentate outlet of the cross-flow filtration device operated in the rinse mode to a mixing location. The vessel is arranged to form the mixing location.

This embodiment removes the need for blending valves. Moreover, there is no need to flush conduits on switching between the filtrate production mode and the rinse mode before supplying liquid through these conduits to the mixing location. It suffices to track the volumes and properties of the liquid supplied to the mixing location and adjust the volumes of later batches of liquid to achieve a target value of the concentration of at least one component of interest in the mix of liquid at the mixing location.

An embodiment of the apparatus that includes at least one vessel for receiving at least one of the filtrate and the liquid originating from the retentate outlet of the cross-flow filtration device operated in the rinse mode includes at least one sensor for tracking a volume of liquid in the vessel.

There may be multiple sensors in conduits connected to the vessel, in order to keep track of how much liquid is added and removed from the vessel. Alternatively, a level sensor may be used.

An embodiment of the liquid treatment apparatus further includes at least one liquid treatment device, e.g. a liquid treatment device for treating liquid by other means than membrane filtration, e.g. by sorption.

It is thus possible, for example, to remove organic or microbial contaminants from the liquid originating from the retentate outlet before use in producing the product liquid.

The invention will be explained in further detail with reference to the accompanying drawings, in which:
- Fig. 1: is a schematic diagram of a first liquid treatment apparatus and the flows of liquid in a stage in which a cross-flow filtration device in the apparatus is operated in a filtrate production mode;
- Fig. 2: is a schematic diagram of the first liquid treatment apparatus in a first phase of a stage in which the cross-flow filtration device is operated in a rinse mode;
- Fig. 3: is a schematic diagram of the first liquid treatment apparatus in a second phase of a stage in which the cross-flow filtration device is operated in the rinse mode;
- Fig. 4: is a flow chart showing steps in a method of controlling the operation of the liquid treatment apparatus;
- Fig. 5: is a schematic diagram of a second liquid treatment apparatus showing flows of liquid in a stage in which a cross-flow filtration device in the liquid treatment apparatus is operated in a filtrate production mode;
- Fig. 6: is a schematic diagram of the second liquid treatment apparatus showing flows of liquid in a first phase of a stage in which the cross-flow filtration device is operated in a rinse mode;
- Fig. 7: is a schematic diagram of the second liquid treatment apparatus showing flows of liquid in a second phase of a stage in which the cross-flow filtration device is operated in the rinse mode;
- Fig. 8: is a schematic diagram of a third liquid treatment apparatus in a first configuration;
- Fig. 9: is a schematic diagram of the third liquid treatment apparatus in a second configuration; and
- Fig. 10: is a flow chart showing steps in a method of operating the third liquid treatment apparatus.

The liquid treatment apparatuses discussed below are each suitable for treating aqueous liquids, e.g. mains drinking water. The treated liquid is supplied to one or more appliances. The appliances may in particular be arranged to draw treated liquid on demand. Such appliances include, for example, coffee machines for catering establishments. Water supplied to such appliances should have a total hardness, carbonate hardness and mineral concentration within certain respective ranges having lower limits higher than zero. If the water to be treated is relatively saline, then one way of meeting the target is to use a liquid treatment apparatus including a cross-flow filtration device for at least one of nanofiltration and reverse osmosis filtration.

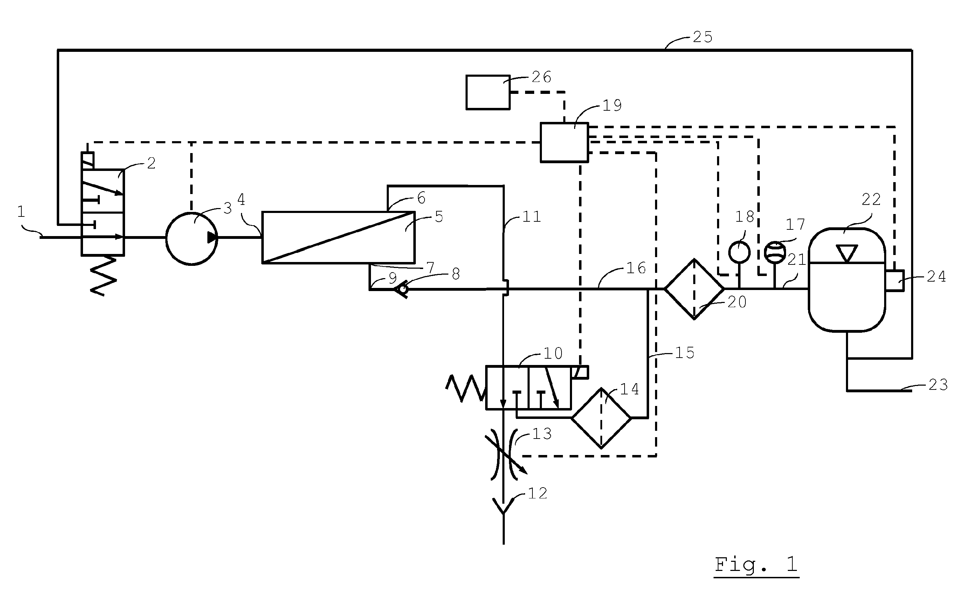

A first liquid treatment apparatus (Figs. 1-3) includes an inlet 1 for liquid to be treated, a first switching valve 2 and a pump 3. The pump 3 is arranged to deliver liquid to an inlet 4 of a cross-flow filtration device 5.

The cross-flow filtration device 5 has an outlet 6 for retentate, also referred to as concentrate in the case of reverse osmosis purification. It further has an outlet 7 for filtrate. A non-return valve 8 is arranged immediately downstream of the filtrate outlet 7 and connected to the filtrate outlet 7 via a first filtrate conduit section 9. The retentate outlet 6 is connected to a second switching valve 10 via a first retentate conduit section 11. The second switching valve has an outlet connected to drain 12 via a variable throttling valve 13. A second outlet is connected to an (optional) liquid treatment device 14 via a second retentate conduit section 15.

The liquid treatment device 14 is a device for the treatment of liquid by other means than membrane filtration. In an embodiment, it includes a liquid treatment medium for the treatment of liquid by sorption, which for present purposes includes ion exchange. The liquid treatment medium may in particular include activated carbon.

An outlet of the liquid treatment device 14 is connected via a second retentate conduit section 15 to a second filtrate conduit section 16 having an upstream end connected to the non-return valve 8.

The second filtrate conduit section 16 has a flow meter 17 and a conductivity sensor 18 arranged therein. These measure the volume and specific electrical conductivity of the liquid passing through the second filtrate conduit section 16. Appropriate signals are provided to a control device 19 arranged, amongst others, to control the switching of the first and second switching valves 2,10.

The second filtrate conduit section 16 leads to a further liquid treatment device 20, from which a third filtrate conduit section 21 leads to a vessel 22 for collecting liquid. Liquid in the vessel 22 can be delivered to an outlet 23 for dispensing the liquid, referred to herein as product liquid, or delivering it to an appliance (not shown). A level sensor 24 is arranged to monitor the volume of liquid in the vessel and to provide an appropriate signal to the control device 19. Instead of the level sensor 24, a flow meter may be arranged in or downstream of an outlet of the vessel 22 to track the volume of liquid leaving the vessel 22. The volume remaining is then tracked by the control device 19 by inference.

The further liquid treatment device 20 is optional. Like the liquid treatment device 14, it is a device for the treatment of liquid by other means than membrane filtration. In an embodiment, it includes a liquid treatment medium for the treatment of liquid by sorption, which for present purposes includes ion exchange. The liquid treatment medium may in particular include activated carbon. In general, no more than one of the first and second liquid treatment devices 14,20 will be present. Which one is present, is a matter of design choice. Choosing the liquid treatment device 14 implies that only liquid originating from the retentate outlet 6 is treated. Where the liquid treatment devices 14,20 include liquid treatment media having a finite treatment capacity, the rate of exhaustion is lower if the liquid treatment device 14 is chosen. On the other hand, the volume of liquid between the second switching valve 10 and the second filtrate conduit section 16 is larger than if the second switching valve 10 were to be connected directly or almost directly to the second filtrate conduit section 16.

A return conduit 25 allows liquid to be delivered from the vessel 22 to an inlet of the first switching valve 2. The first switching valve 2 can thus be switched between a configuration in which liquid received at the apparatus inlet 1 is delivered to the inlet 4 of the cross-flow filtration device 5 and a configuration in which liquid from the vessel 22 is delivered to the inlet 4 of the cross-flow filtration device 5.

An interface 26 allows at least a target value to be input to the control device 19. The interface 26 may be a human-machine interface allowing a user to input a target value or information for determining the target value. It may alternatively be a signal interface for obtaining the target value or information for determining the target value from an appliance connected to the apparatus outlet 23, for example. The information may be information as simple as information identifying the appliance as a coffee machine or a particular kind of coffee machine, as opposed to a dish washer or steam cooker, for example. In an embodiment, at least one of the control device 19 and the interface 26 to the control device 19 limit the target value to values below a maximum value. This takes account of empirical knowledge of the maximum value achievable by the method of operating the liquid treatment apparatus.

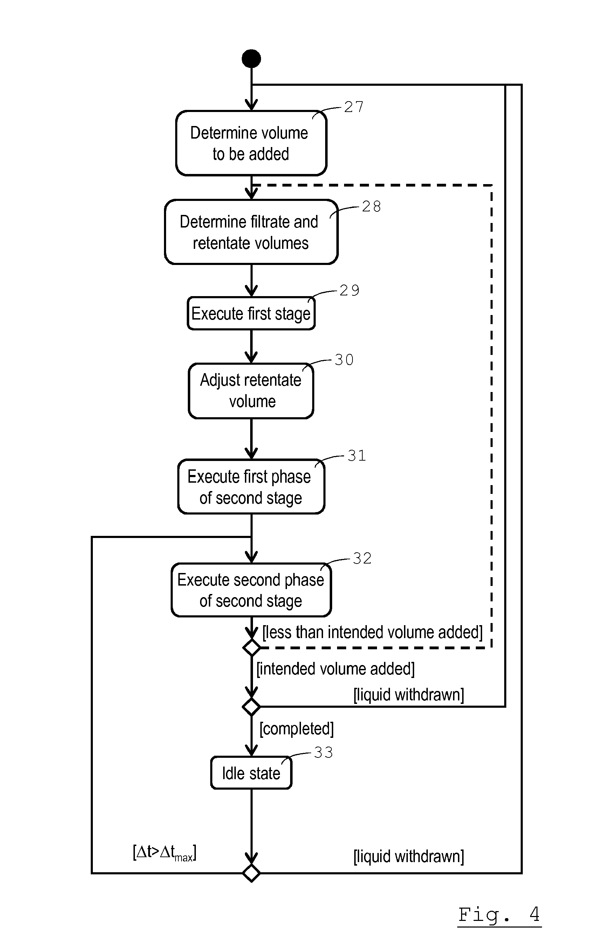

Whenever a new target value or new information for obtaining the target value is received, the control device 19 updates a stored target value for subsequent use in a method of operating the liquid treatment apparatus as illustrated in Fig. 4. In the following, it will be assumed that the target value as stored and used by the control device is the specific electrical conductance.

In a first step 27, the control device 19 determines how much liquid is to be added to the vessel 22, taking account of the level tracked by means of the level sensor 24. It then determines (step 28) an amount of filtrate and an amount of liquid originating from the retentate outlet to be added. The calculation takes account of the fact that the volume of liquid added must equal the sum of the volume of filtrate added, the volume of liquid added that is obtained by operating the cross-flow filtration device 5 in a first phase of a rinse mode and the volume of liquid in the first and second retentate conduit sections 11,15, as well as the volume of liquid in the cross-flow filtration device 5 and optionally the first liquid treatment device 14. It also takes account of the specific electrical conductance values of each of these volumes as determined, for example, during a previous iteration of the method of Fig. 4 by means of the conductivity sensor 18. Furthermore, it tracks the specific electrical conductance and volume of any liquid still remaining in the vessel 22. The volume of liquid originating from the retentate outlet and obtained by operating the cross-flow filtration device 5 in a first phase of a rinse mode is calculated to arrive at a value of the specific electrical conductance of the liquid in the vessel 22 subsequent to replenishment that is slightly below the target value. The difference is again based on empirical data stored by the control device 19.

During the first stage that then follows (step 29), the cross-flow filtration device 5 is operated in a filtrate production mode (Fig. 1). In this mode, the first switching valve 2 is set such that liquid received at the apparatus inlet 1 is led to the inlet 4 of the cross-flow filtration device 5. The second switching valve 10 is set such that liquid from the retentate outlet 6 is conducted to drain 12. The settings of at least one of the variable throttling valve 13 and the pump 3 are controlled to achieve a desired quality of the filtrate that emerges from the filtrate outlet 7 and is passed to the vessel 22.

The volume and specific electrical conductance of the liquid added to the vessel 22 during this step 29 are tracked. They may be used to adjust (optional step 30) the volume of liquid to be added subsequently in order to achieve the value of the specific electrical conductance of the liquid in the vessel 22 subsequently.

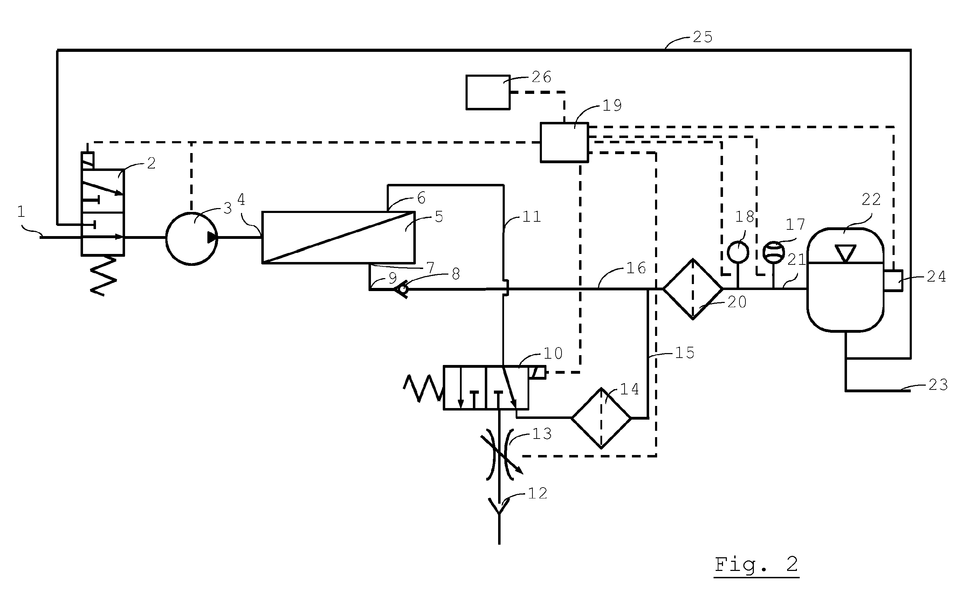

Thereafter, a first phase of a second stage is executed (step 31). To this end, the control device 19 causes the second switching valve 10 to switch to a configuration in which the liquid from the retentate outlet 6 is led to the second filtrate conduit section 16 and from there to the vessel 22 (Fig. 2). In this state, there is no pressure differential across the membrane or membranes in the cross-flow filtration device 5, so that the production of filtrate ceases. The non-return valve 8 prevents a backflow of liquid through the membrane or membranes. In this mode, referred to herein as the rinse mode, essentially all of the liquid entering the cross-flow filtration device 5 leaves through the retentate outlet 6.

The control device 19 may track the specific electrical conductance and the volume of liquid added to the vessel 22 during the execution of this step 31.
It may terminate execution of the step 31 upon determining that the intended value of the specific electrical conductance of the mix of liquid in the vessel 22 must have been reached.

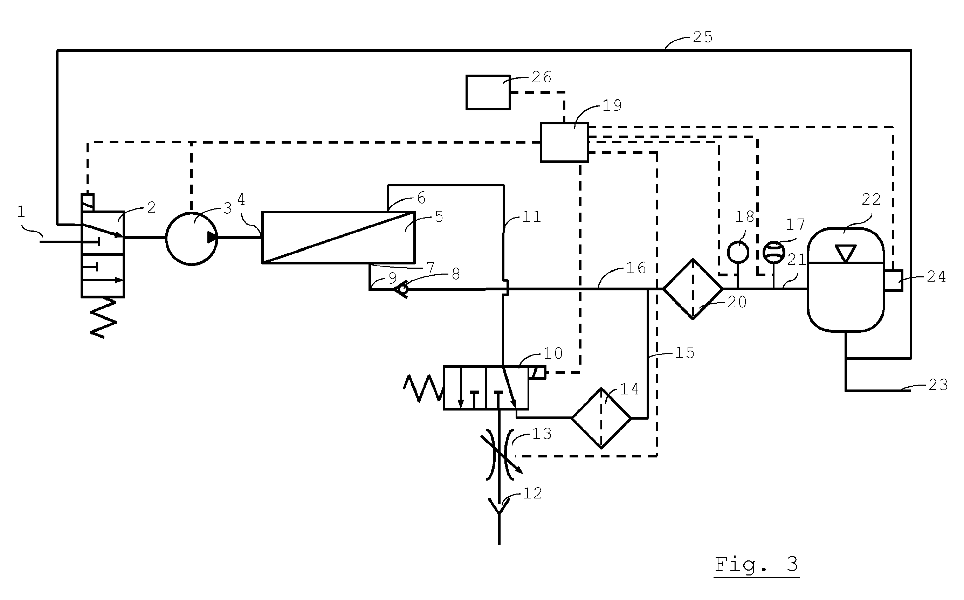

A second phase of the second stage (step 32) then commences. The control device 19 causes the first switching valve 2 to switch to a configuration in which the liquid in the return conduit 25 is pumped to the inlet 4 of the cross-flow filtration device 5 (Fig. 3). No more liquid is drawn through the inlet 1 of the liquid treatment apparatus. The rinsing of the cross-flow filtration device 5 continues. The increase of the specific electrical conductance in this phase is, however, much smaller than in the first phase, indeed may be negligible. Where it is not negligible, account of this increase is taken in the calculations performed to determine the volumes of liquid to be added in the first stage. Thus, the target value for the specific electrical conductance of the liquid in the vessel 22 may be reached at the end of the second phase of the second stage.

In the illustrated embodiment, the second phase of the second stage is interrupted if liquid is drawn through the outlet 23, and the method returns to the first step 27 when the withdrawal ceases. If this is not the case, the second phase of the second stage is completed and the apparatus enters an idle state 33.

If the idle state 33 lasts longer than a pre-determined period of time, the second phase of the second stage is executed again in order to wet the membrane or membranes in the cross-flow filtration device 5 and inhibit bacterial growth. The idle state is also left upon determining that liquid has been withdrawn from the vessel, in which case the method returns to the first step 27.

The second phase of the second stage may also be shortened or skipped if it is determined that liquid has been withdrawn from the vessel 22 during execution of either the first stage or the first phase of the second stage.

It is observed that a variant of the method is possible in which the steps 29 and 31 corresponding to the first stage and the first phase of the second stage are executed repeatedly in succession before the second phase of the second stage is entered. It is, for example possible to execute them with fixed volumes and to vary the number of times each is executed in order to arrive at a particular value of the specific electrical conductance of the liquid in the vessel 22. In another variant (indicated by the dashed line), the volume of liquid in the vessel 22 is increased in increments, with the first and second stages being executed for each increment. It is thus possible to adapt the ratio of filtrate to liquid originating from the retentate outlet 6 between iterations if the specific electrical conductance of the filtrate, the liquid originating from the retentate or the liquid left in the conduit sections 11,15, first liquid treatment device 14 and/or cross-flow filtration device 5 is not as expected.

It is also possible to add a valve controlled by the control device 19 to the non-return valve 8 or replace the latter by such a valve. In such an embodiment, the production of filtrate would be terminated by switching this valve before the second switching valve 10 is switched to connected the retentate outlet 6 to the vessel 22, so that only liquid with a relatively constant specific electrical conductivity is added to the vessel 22.

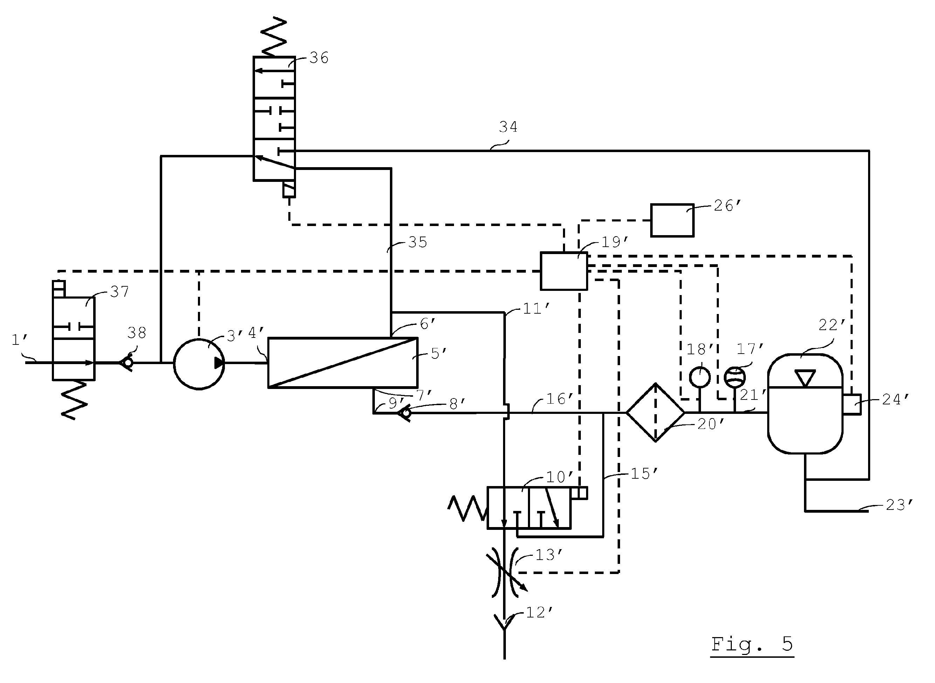

A second liquid treatment apparatus (Figs. 5-7) is similar to the first liquid treatment apparatus, so that like parts are indicated by like reference numerals. The second liquid treatment apparatus has a relatively high yield. In addition to a first return conduit 34 from the vessel 22', the second liquid treatment apparatus includes a second return conduit 35, connected to the retentate outlet 6'. Both return conduits 34,35 are connected to a 3/3-valve 36, of which an outlet is connected to an inlet of the pump 3'. The inlet 1' of the second liquid treatment apparatus is connected to the pump 3' via a two-port valve 37 and a second non-return valve 38 (the first non-return valve being the non-return valve 8' through which filtrate from the cross-flow filtration device 5' is discharged).

The second liquid treatment apparatus is operated in the same manner as the first liquid treatment apparatus. In the first stage (step 29), in which the cross-flow filtration device 5' is operated in the filtrate production mode (Fig. 5), the two-port valve 37 admits untreated liquid into the apparatus. This liquid passes via the second non-return valve 38 to the pump 3'. The pump 3' also draws recycled retentate through the 3/3-valve 36, which blocks any flow of liquid from the vessel 22' to the pump 3'. A portion of the retentate passes to drain 12' via the switching valve 10'. The control device 19' controls the pump 3' and the throttling valve 13' to determine how much retentate is produced and how much of it is discarded.

The filtrate leaves the filtrate outlet 7' through the first non-return valve 8'. It passes through the liquid treatment device 20' into the vessel 22'.

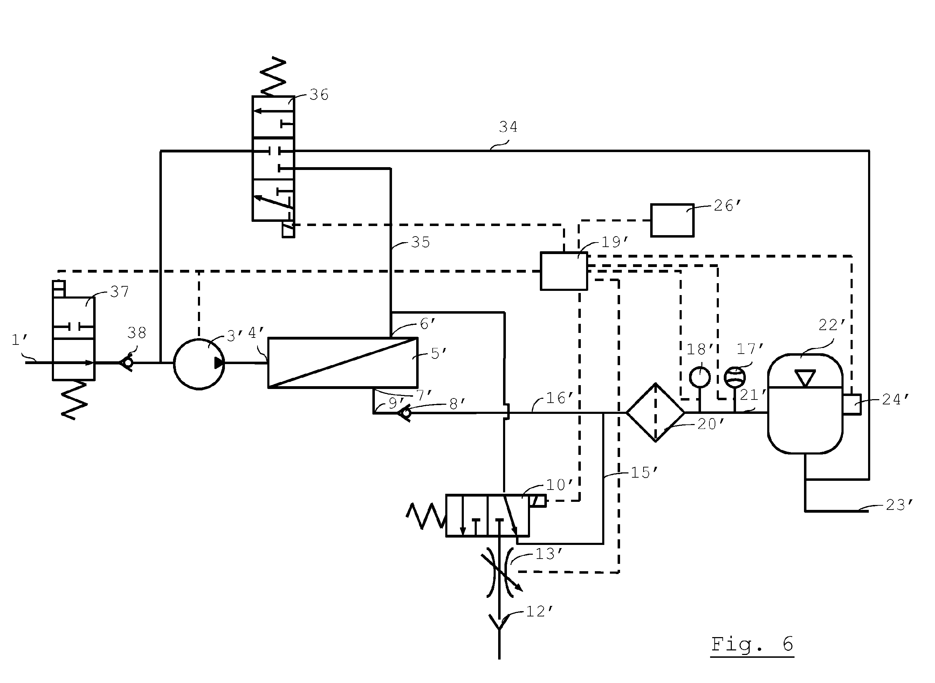

To reach the first phase of the second stage (Fig. 6), the control device 19' switches the 3/3-valve 36 into a state in which both the flow of retentate and the flow of liquid from the vessel 22' to the pump 3' are blocked. Only untreated liquid is conveyed to the inlet 4'. The control device 19' also switches the switching valve 10' into a state in which liquid originating from the retentate outlet 6' is diverted to the second filtrate conduit section 16'. From there, it passes into the vessel 22' via the liquid treatment device 20', the flow meter 17' and the conductivity sensor 18'. The non-return valve 8 prevents a backflow of liquid through the membrane or membranes of the cross-flow filtration device 5'.

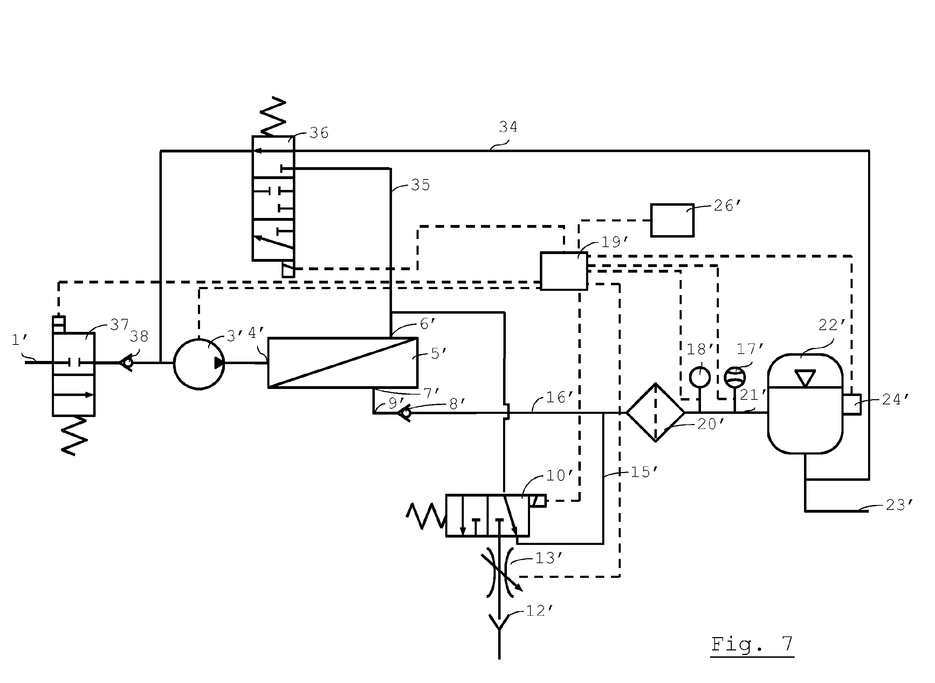

In the second phase of the second stage (Fig. 7), the two-port valve 37 is closed to prevent the admission of untreated liquid via the inlet 1'. The 3/3-valve 36 is in a state in which a flow of liquid from the vessel 22' to the pump 3' is enabled. The second phase of the second stage may again be shortened or skipped if it is determined that liquid has been withdrawn from the vessel 22 during execution of either the first stage or the first phase of the second stage.

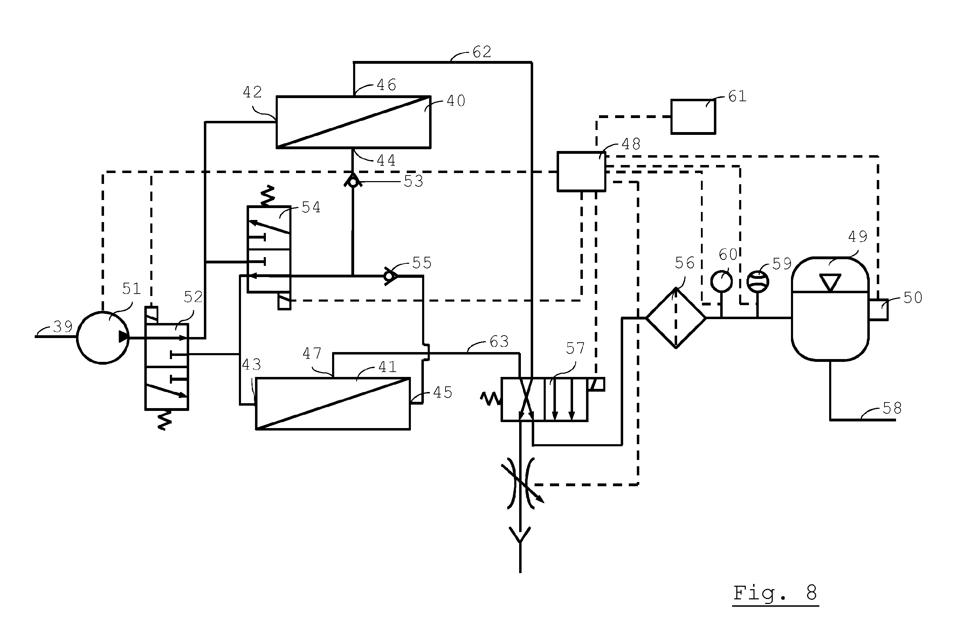

A third liquid treatment apparatus (Figs. 8-9) has an inlet 39 for untreated liquid, e.g. mains water. It includes first and second cross-flow filtration devices 40,41, having respective inlets 42,43, outlets for filtrate 44,45 and outlets 46,47 for retentate. One of the cross-flow filtration devices 40,41 is operated in a filtrate production mode whilst the other is operated in a rinse mode. Liquid originating from the filtrate outlet 44,45 of the cross-flow filtration device 40,41 is passed to the inlet 42,43 of the other cross-flow filtration device 40,41. After a certain period of time, the roles are switched. A control device 48 controls the operation of the cross-flow filtration devices 40,41, including the switching. A mix of filtrate and retentate is collected in a vessel 49 provided with a level sensor 50. The latter provides a signal to a control device 48 enabling it to determine whether to cause a pump 51 to operate. In a first configuration (Fig. 8), the pump 51 supplies untreated liquid to a first of the cross-flow filtration device 40,41 via a first switching valve 52. The first cross-flow filtration device 40 operates in a filtrate production mode, in which liquid passes through the membrane or membranes to the filtrate outlet 44. The filtrate outlet 44 is arranged to supply filtrate through a first non-return valve 53 to a second switching valve 54. The second switching valve 54 is in a configuration in which this liquid is supplied to the inlet 43 of the second cross-flow filtration device 41.

The second cross-flow filtration device 41 is configured to operate in a rinse mode, in which a relatively large proportion, indeed essentially all, of the liquid entering through the inlet 43 passes to the retentate outlet 47. A second non-return valve 55 prevents liquid from flowing into the second cross-flow filtration device 41 through its filtrate outlet 45.

The liquid from the retentate outlet 47 of the first cross-flow filtration device 41 is directed to a liquid treatment device 56 by a 4/2-valve 57 controlled by the control device 48. The liquid treatment device 56 is a device for the treatment of liquid by other means than membrane filtration. In an embodiment, it includes a liquid treatment medium for the treatment of liquid by sorption, which for present purposes includes ion exchange. The liquid treatment medium may in particular include activated carbon.

The liquid treated by the liquid treatment device 56 is collected in the vessel 49, from which it can be dispensed or supplied to an appliance (not shown) via an outlet 58 of the third liquid treatment apparatus.

In addition to the signal from the level sensor 50, the control device 48 also receives signals from a flow meter 59 and a conductivity sensor 60 for measuring the volume and the specific electrical conductance respectively of liquid supplied to the vessel 49.

In operation, the control device 48 retains in memory a target value of the specific electrical conductance of the liquid in the vessel 49. This can be changed by providing a new target value or information for deriving the target value through an interface 61. The interface 61 may be a human-machine interface allowing a user to input a target value or information for determining the target value. It may alternatively be a signal interface for obtaining the target value or information for determining the target value from an appliance connected to the apparatus outlet 58, for example.

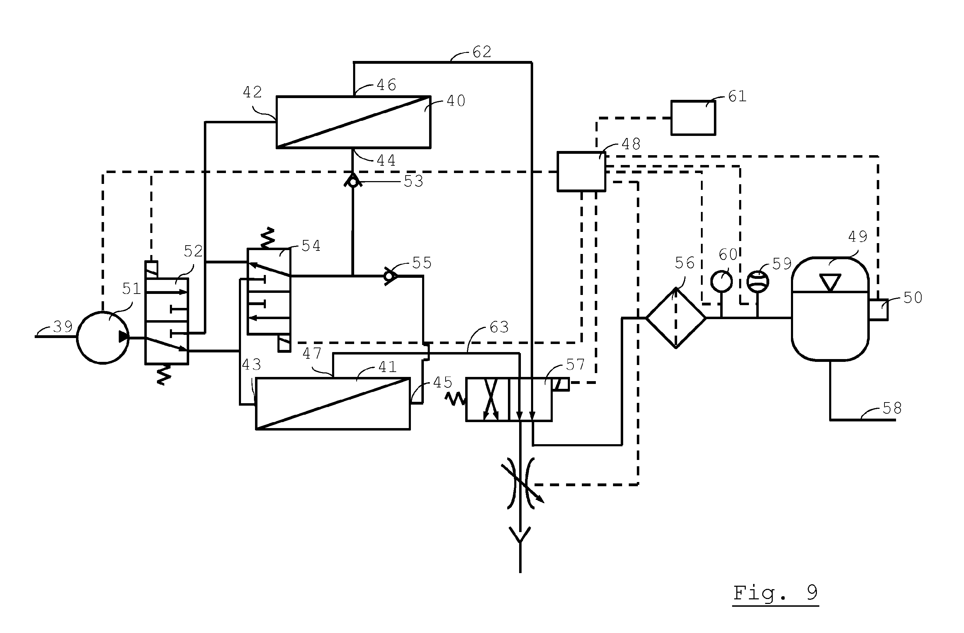

Just after a switch from the first configuration (Fig. 8), in which the first cross-flow filtration device 40 is operated in a filtrate production mode, to a second configuration (Fig. 9), there will be a volume of retentate in the first cross-flow filtration device 40 on the upstream side of the membrane or membranes, as well as in a conduit section 62 connecting the retentate outlet 46 of the first cross-flow filtration device 40 to the 4/2-valve 57. This volume is known. This liquid will have a relatively high specific electrical conductance. If the rinse mode is then continued, the specific electrical conductance will drop as the liquid originating from the retentate outlet 46 changes to filtrate from the second cross-flow filtration device 41 that has passed through the first cross-flow filtration device 40 between its inlet 42 and its retentate outlet 46. The same is true when the third liquid treatment apparatus is switched from the second configuration (Fig. 9) to the first configuration (Fig. 8), in which case a volume of retentate in the second cross-flow filtration device 41 on the upstream side of the membrane or membranes and in a conduit section 63 connecting the retentate outlet 47 of the second cross-flow filtration device 41 to the 4/2-valve is first flushed into the vessel 49.

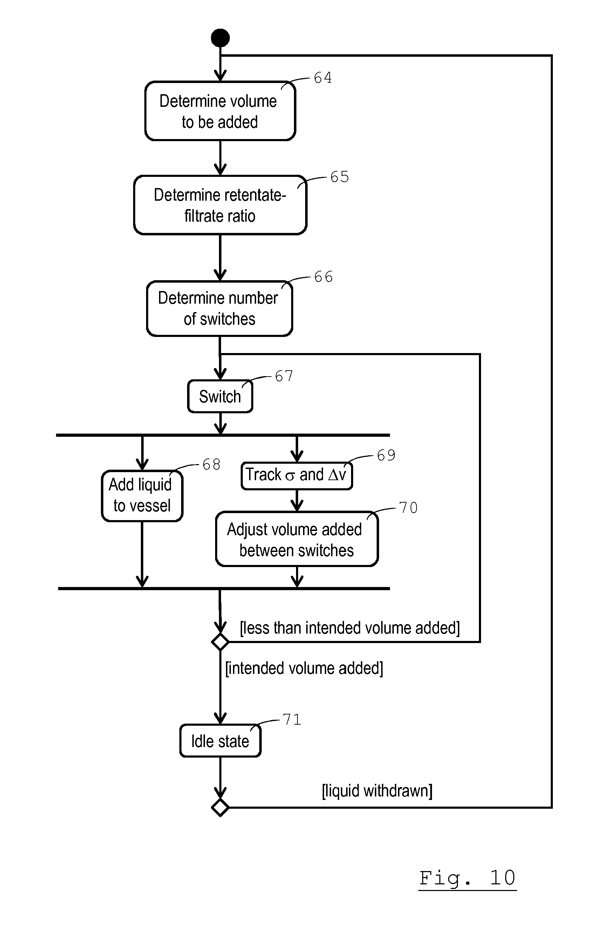

By prolonging the time between switches, a higher ratio of filtrate to retentate will be supplied to the vessel 49. It is thus possible to vary the specific electrical conductance of the product liquid in the vessel 49. The only requirement is that the vessel 49 should have space to take up the volume of filtrate to be mixed with the volume of retentate flushed out of the first cross-flow filtration device 40 and the conduit section 62, if the switch is from the first configuration (Fig. 8) to the second configuration (Fig. 9). This can be ensured by commencing a method of operating the third liquid treatment apparatus (Fig. 10) only after the level of liquid in the vessel 49 has decreased be-low a certain value or by keeping the length of the conduit section 62 short relative to the volume of liquid typically dispensed from the vessel 22.

In a first step 64, the volume of product liquid to be added to the vessel 49 is determined. Given the target value for the specific electrical conductance and e.g. the latest available values of the specific electrical conductance of retentate and filtrate that has passed through a cross-filtration device 40,41 operating in the rinse mode, as well as the specific electrical conductance and volume of any liquid remaining in the vessel 49, the volumetric ratio of retentate to filtrate is determined (step 65). From this, the volume to be added between switches can be derived, and thus the total number of switches (step 66). The valves 52,54,57 are then caused to switch (step 67) for the first time. Liquid is added to the vessel 49 (step 68). In the illustrated embodiment, the value of the specific electrical conductance is tracked, together with the volume of liquid having that value that is added to the vessel (step 69). Thus, the value of the specific electrical conductance to be used in future in the preceding step 65 can be updated. Moreover, the volume between switches can be updated (step 70). If the number of switches calculated previously (step 66) or the volume to be added has not been reached, the valves 52,54,57 are caused to switch again. Otherwise, the liquid treatment apparatus enters an idle state 71, waiting for the volume of liquid in the vessel 49 to drop again.

Thus, product liquid with a target value of the specific electrical conductance is obtained in a method that results in a relatively high yield from the liquid received at the apparatus inlet 39. At the same time, the useful lifetime of the cross-flow filtration devices 40,41 is kept relatively long.

The invention is not limited to the embodiments described above, which may be varied within the scope of the accompanying claims. For example, although the vessels 22,22',49 have been depicted as hydraulic accumulators, they may alternatively be open vessels 22,22',49, e.g. combined with a pump for delivering liquid through the apparatus outlet 23,23',58.

### List of reference numerals

- 1: - apparatus inlet
- 2: - 1^{st} switching valve
- 3: - pump
- 4: - inlet
- 5: - filtration device
- 6: - retentate outlet
- 7: - filtrate outlet
- 8: - non-return valve
- 9: - 1^{st} filtrate conduit section
- 10: - 2^{nd} switching valve
- 11: - 1^{st} retentate conduit section
- 12: - drain
- 13: - throttling valve
- 14: - 1^{st} liquid treatment device
- 15: - 2^{nd} retentate conduit section
- 16: - 2^{nd} filtrate conduit section
- 17: - flow meter
- 18: - conductivity sensor
- 19: - control device
- 20: - 2^{nd} liquid treatment device
- 21: - 3^{rd} filtrate conduit section
- 22: - vessel
- 23: - apparatus outlet
- 24: - level sensor
- 25: - return conduit
- 26: - interface
- 27: - step (determine volume to be added)
- 28: - step (determine filtrate and retentate volumes)
- 29: - step (execute first stage)
- 30: - step (adjust retentate volume)
- 31: - step (execute first phase of second stage)
- 32: - step (execute second phase of second stage)
- 33: - idle state
- 34: - 1^{st} return conduit
- 35: - 2^{nd} return conduit
- 36: - 3/3-valve
- 37: - two-port valve
- 38: - further non-return valve
- 39: - apparatus inlet
- 40: - 1^{st} cross-flow filtration device
- 41: - 2^{nd} cross-flow filtration device
- 42: - inlet of 1^{st} cross-flow filtration device
- 43: - inlet of 2^{nd} cross-flow filtration device
- 44: - filtrate outlet of 1^{st} cross-flow filtration device
- 45: - filtrate outlet of 2^{nd} cross-flow filtration device
- 46: - retentate outlet of 1^{st} cross-flow filtration device
- 47: - retentate outlet of 2^{nd} cross-flow filtration device
- 48: - control device
- 49: - vessel
- 50: - level sensor
- 51: - pump
- 52: - 1^{st} switching valve
- 53: - 1^{st} non-return valve
- 54: - 2^{nd} switching valve
- 55: - 2^{nd} non-return valve
- 56: - liquid treatment device
- 57: - 4/2-valve
- 58: - apparatus outlet
- 59: - flow meter
- 60: - conductivity sensor
- 61: - interface
- 62: - conduit section connecting retentate outlet of 1^{st} cross-flow filtration device to 4/2-valve
- 63: - conduit section connecting retentate outlet of 2^{nd} cross-flow filtration device to 4/2-valve
- 64: - step (determine volume to be added)
- 65: - step (determine retentate-filtrate ratio)
- 66: - step (determine number of switches)
- 67: - step (switch)
- 68: - step (add liquid to vessel)
- 69: - step (track σ and Δv)
- 70: - step (adjust volume between switches)
- 71: - idle state

## Claims

1. Method of operating a liquid treatment apparatus including at least one cross-flow filtration device (5;5';40,41), each cross-flow filtration device (5;5';40,41) having an inlet (4;4';42,43), an outlet (6;6';46,47) for retentate and an outlet for filtrate (7;7';44,45),
wherein the method includes operating one of the at least one cross-flow filtration devices (5;5';40,41) to obtain filtrate, and wherein
the filtrate is used to produce product liquid for delivery through an outlet (23;23';58) of the apparatus,
**characterised by**
operating at least one of the at least one cross-flow filtration devices (5;5';40,41) in a rinse mode, in which a larger proportion of liquid entering through the inlet (4;4';42,43) passes to the retentate outlet (6;6';46,47) than during a preceding filtrate production mode of operation of that cross-flow filtration device (5;5';40,41), and using liquid originating from that retentate outlet (6;6';46,47) to produce the product liquid.

2. Method according to claim 1, including
controlling the production of the product liquid to achieve a target value of a measure of a concentration of at least one component in the product liquid.

3. Method according to claim 1 or 2,
wherein the liquid originating from the retentate outlet (6;6';46,47) and used to produce the product liquid is admixed to other liquid, e.g. liquid including at least some of the filtrate.

4. Method according to claim 3, including
obtaining a signal representative of a measure of a concentration of at least one component in the liquid originating from the retentate outlet (6;6';46,47) from a sensor (18;18';60) prior to mixing and determining a volume of a flow of liquid originating from the retentate outlet (6;6';46,47) and used for mixing.

5. Method according to claim 4, including
measuring the volume of the flow of liquid originating from the retentate outlet (6;6';46,47) and used for mixing.

6. Method according to claim 4 or 5, including calculating a required volume and controlling the volume of the flow of liquid originating from the retentate outlet (6;6';46,47) and used for mixing.

7. Method according to any one claims 3-6,
wherein the admixing includes at least a first phase, in which the liquid originating from the retentate outlet (6;6') of one of the at least one cross-flow filtration devices (5;5') is liquid obtained by supplying at least some liquid other than the filtrate to the inlet (4;4') of that cross-flow filtration device (5;5').

8. Method according to any one of claims 3-7, including:
calculating volumes of filtrate and liquid originating from the retentate outlet (6;6') to be mixed in the first phase on the basis of a target value of a measure of a concentration of at least one component in the product liquid and values of the measure in the liquid originating from the retentate outlet (6;6';46,47) prior to mixing and in the liquid to which the liquid originating from the retentate outlet (6;6';46,47) is admixed.

9. Method according to claim 8,
wherein the volumes are calculated to achieve a value of the measure in the mix in the first phase lower than the target value, and wherein the value is raised in a second phase to obtain the product liquid.

10. Method according to any one of the preceding claims,
wherein the liquid treatment apparatus includes at least two of the cross-flow filtration devices (40,41), and
wherein the filtrate is obtained by operating one of the cross-flow filtration devices (40,41) in the filtrate production mode whilst operating another of the cross-flow filtration devices (40,41) in the rinse mode.

11. Method according to any one of the preceding claims,
wherein at least one of the filtrate and the liquid originating from the retentate outlet (6;6';46,47) is delivered to a vessel (22;22';49).

12. Method according to claim 11 and any one of claims 3-9,
wherein the liquid originating from the retentate outlet (6;6';46,47) is admixed in the vessel (22;22';49).

13. Liquid treatment apparatus including:
at least one cross-flow filtration device (5;5';40,41), each cross-flow filtration device (5;5';40,41) having an inlet (4;4';42,43), an outlet (6;6';46,47) for retentate and an outlet for filtrate (7;7';44,45);
an outlet (23;23';58) for the delivery of product liquid;
a system of conduits (9,11,15,16,21;9',11',15',16',21';62,63) and
valves (2,10;10',36,37;52,54,57) for using filtrate obtained by operating one of the at least one cross-flow filtration devices (5;5';40,41) to produce the product liquid; and
a control system (19;19';48) for controlling the operation of the liquid treatment apparatus, **characterised in that** the control system (19;19';48) is arranged to switch the valves (2,10;10',36,37;52,54,57) such that at least one of the at least one cross-flow filtration devices (5;5';40,41) is operated in a rinse mode, in which a larger proportion of liquid entering through the inlet (4;4';42,43) passes to the retentate outlet (6;6';46,47) than during a preceding filtrate production mode of operation of that cross-flow filtration device (5;5';40,41), and liquid originating from that retentate outlet (6;6';46,47) is used to produce the product liquid.

14. Apparatus according to claim 13,
including an interface (26;26';61) for obtaining data representative of a target value of a measure of a concentration of at least one component in the product liquid,
wherein the control system (19;19';48) is arranged to control production of the product liquid to achieve the target value.

15. Apparatus according to claim 13 or 14,
wherein the system of conduits (9,11,15,16,21;9',11',15',16',21';62,63) and valves (2,10;10',36,37;52,54,57) is at least switchable into a configuration for delivering at least the liquid originating from the retentate outlet (6;6';46,47) of the cross-flow filtration device (5;5') operated in the rinse mode to a mixing location.
